# EUROPEAN PATENT APPLICATION

(11) **EP 4 610 231 A1**
(43) Date of publication of application: **03.09.2025**
(21) Application number: 24750607.4
(22) Date of filing: 01.02.2024
(51) Int. Cl.: C01G 53/04, C01G 53/00, H01M 4/505, H01M 4/525, H01M 10/0525, H01M 4/02

(54) **TRANSITION METAL HYDROXIDE, METHOD FOR PREPARING SAME, AND METHOD FOR PREPARING POSITIVE ELECTRODE ACTIVE MATERIAL BY USING SAME**

(30) Priority: 03.02.2023 KR 20230015174
(71) Applicant: LG Chem, Ltd., Seoul 07336 (KR)
(72) Inventor: YOON, Ju Han, Daejeon 34122 (KR); KIM, Jun Gil, Daejeon 34122 (KR); KIM, Won Tae, Daejeon 34122 (KR); YANG, Jeong Jin, Daejeon 34122 (KR)
(74) Representative: Hoffmann Eitle
(86) International application number: PCT/KR2024/001570
(87) International publication number: WO 2024/162810

(57) **Abstract**

The present invention relates to a transition metal hydroxide capable of providing a positive electrode active material with excellent capacity characteristics, a method for preparing same, and a method for preparing a positive electrode active material by using same. Provided are a transition metal hydroxide, a method for preparing same, and a method for preparing a positive electrode active material by using same, the transition metal hydroxide comprising polycrystalline particles composed of spherical secondary particles in which acicular primary particles are agglomerated, having a specific surface area measured by the nitrogen adsorption BET method of 23 m²/g to 43 m²/g, having a particle size distribution curve diffusion index defined by equation 1 of less than 0.7, and being represented by chemical formula 1.

## Description

### TECHNICAL FIELD

### Cross-reference to Related Applications

This application claims the benefit of priority from Korean Patent Application No. 10-2023-0015174, filed on February 03, 2023, in the Korean Intellectual Property Office, the disclosure of which is incorporated herein in its entirety by reference.

### Technical Field

The present invention relates to a transition metal hydroxide capable of providing a positive electrode active material having excellent capacity characteristics, a method for preparing the same, and a method for preparing a positive electrode active material using the same.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt composite metal oxide of LiCoO₂ having a high operating voltage and excellent capacity characteristics has been mainly used. However, since the LiCoO₂ has very poor thermal properties due to an unstable crystal structure caused by delithiation and is expensive, there is a limitation in using a large amount of the LiCoO₂ as a power source for applications such as electric vehicles.

Lithium manganese composite metal oxides (LiMnO₂ or LiMn₂O₄), lithium iron phosphate compounds (LiFePO₄, etc.), or lithium nickel composite metal oxides (LiNiO₂, etc.) have been developed as materials for replacing the LiCoO₂. Among these materials, research and development of the lithium nickel composite metal oxides, in which a large capacity battery may be easily achieved due to a high reversible capacity of about 250 mAh/g, have been actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery.

Accordingly, as a method to improve low thermal stability while maintaining the excellent reversible capacity of the LiNiO₂, a nickel cobalt manganese-based lithium composite transition metal oxide (hereinafter, simply referred to as "NCM-based lithium oxide"), in which a portion of Ni is substituted with Mn and Co or Al, has been developed.

However, due to the recent increase in the price of cobalt (Co), a lithium-rich (Li-rich) NCM-based positive electrode active material capable of meeting the capacity while containing or not containing a relatively low amount of the cobalt (Co) has been developed.

A general NCM-based positive electrode active material precursor has a flake shape of a primary particle and has a low specific surface area, and a positive electrode active material prepared therefrom also has a flake shape of a primary particle and has a specific surface area of less than 1 m²/g and exhibits appropriate capacity characteristics.

Meanwhile, in the case of cobalt-free, Li and Mn-rich positive electrode active materials, a large amount of Li is required compared to the general NCM-based positive electrode active material, and thus a positive electrode active material precursor having a high specific surface area capable of contacting Li is required.

Accordingly, like the general NCM-based positive electrode active material precursor, when a precursor has a flake-shaped primary particle and has a low specific surface area, the reaction with an excess amount of Li is not properly performed, and thus it is difficult to express sufficient capacity characteristics, and accordingly, there is a limitation in that initial capacity, lifetime characteristics, and resistance characteristics are poor.

Accordingly, there is a need to develop a positive electrode active material precursor for the development of cobalt-free or cobalt-reduced, Li and Mn-rich positive electrode active materials having excellent capacity characteristics, lifetime characteristics, and resistance characteristics.

### [PRIOR ART DOCUMENT]

### [PATENT DOCUMENT]

(Patent Document 1) CN 109970106 A (05 July 2019)

### DISCLOSURE OF THE INVENTION

### TECHNICAL PROBLEM

To solve the above limitations, an aspect of the present invention provides a transition metal hydroxide including polycrystalline particles composed of secondary particles in which needle-shaped primary particles are aggregated, and having a particular specific surface area and a particle size distribution curve diffusion index.

Another aspect of the present invention provides a method for preparing the transition metal hydroxide, the method including a co-precipitation reaction performed under conditions in which the dissolved oxygen is controlled.

Furthermore, yet another aspect of the present invention provides a method for preparing a positive electrode active material by using the positive electrode active material precursor.

### TECHNICAL SOLUTION

In order to solve the above problems, the present invention provides a transition metal hydroxide, a method for preparing the same, and a method for preparing a positive electrode active material.
(1) According to an aspect of the present invention, there is provided a transition metal hydroxide which is represented by Formula 1 below and includes polycrystalline particles composed of spherical secondary particles in which needle-shaped primary particles are aggregated, wherein the specific surface area measured by a nitrogen adsorption BET method is 23 m²/g to 43 m²/g, and the particle size distribution curve diffusion index defined by Equation 1 below is less than 0.7:
   particle size distribution curve diffusion index = [(D90-D10)/D50]
   wherein, in Equation 1 above,
   D₁₀ denotes a particle diameter corresponding to 10% of a volume accumulation from a side having a small particle diameter in a volume-based particle size distribution curve obtained via measurement by a laser diffraction scattering-type particle size distribution measurement method, D₉₀ denotes a particle diameter corresponding to 90% of a volume accumulation from a side having a small particle diameter in the particle size distribution, and D₅₀ denotes a particle diameter corresponding to 50% of a volume accumulation from a side having a small particle diameter in the particle size distribution,

      [Formula 1] [MnₐNi_{b}M¹_{c1}M²_{c2}](OH)₂
   wherein, in Formula 1 above,
   M¹ is Co,
   M² is one selected from among Zr, Al, Cu, Re, V, Cr, Fe, Ga, Si, B, Ru, Ti, Nb, Mo, Mg, W, and Pt, and
   0.50<a≤0.80, 0.10≤b≤0.40, 0≤c₁≤0.02, and 0≤c₂≤0.10 a+b+c₁+c₂=1.
(2) In (1) above of the present invention, there is provided the transition metal hydroxide that does not include Co.
(3) In (1) or (2) above of the present invention, there is provided the transition metal hydroxide represented by Formula 1-1 below:

   [Formula 1-1] [MnₐNi_{b}M²_{c2}](OH)₂

   wherein, in Formula 1-1 above,
   M² is one selected from among Zr, Al, Cu, Re, V, Cr, Fe, Ga, Si, B, Ru, Ti, Nb, Mo, Mg, W, and Pt, and
   0.6≤a≤0.8, 0.1≤b≤0.4, 0≤c₂≤0.1, and a+b+c₂=1.
(4) In any one of (1) to (3) above of the present invention, there is provided the transition metal hydroxide, wherein the particle size distribution curve diffusion index is 0.4 or more and less than 0.7.
(5) In any one of (1) to (4) above of the present invention, there is provided the transition metal hydroxide, wherein the secondary particles have an average particle diameter (D₅₀) of 3 µm to 12 µm.
(6) According to another aspect of the present invention, there is provided a method for preparing the transition metal hydroxide of any one of (1) to (5) above, the method including subjecting a transition metal solution containing Ni and Mn to a co-precipitation reaction in the presence of a basic solution, wherein the co-precipitation reaction is performed under the condition of 0.0054 mg/L to 0.075 mg/L of dissolved oxygen.
(7) In (6) above of the present invention, there is provided the method for preparing a transition metal hydroxide, wherein the co-precipitation reaction is performed by a step (S1-1) for adding a transition metal solution containing Ni and Mn and a basic solution into a reactor in which a pH of 12.0 or less and an inert atmosphere are formed, and starting a reaction under a condition of pH of 11.0 or less to generate a particle nucleus; and a step (S1-2) for continuously growing the particle nucleus while maintaining the pH of 11.0 or less, and nitrogen and air are introduced into the reactor at the same time as starting the reaction of step (S1-1) to form the dissolved oxygen condition, and the dissolved oxygen condition is maintained during the entire reaction of steps (S1-1) and (S1-2).
(8) In (6) or (7) above of the present invention, there is provided the method for preparing a transition metal hydroxide, wherein the co-precipitation reaction is performed by further using an ammonium cation complex forming agent.
(9) In any one of (6) to (8) of the present invention, there is provided the method for preparing a transition metal hydroxide, wherein the transition metal solution further includes one or more selected from among Zr, Al, Co, Cu, Re, V, Cr, Fe, Ga, Si, B, Ru, Ti, Nb, Mo, Mg, W, and Pt.
(10) In any one of (6) to (9) of the present invention, there is provided the method for preparing a transition metal hydroxide, wherein the transition metal solution contains at least 50 mol% of Mn in the transition metal.
(11) According to still another aspect of the present invention, there is provided a method for preparing a positive electrode active material, the method including: mixing a transition metal hydroxide of any one of (1) to (5) with a lithium raw material; and firing the mixture.
(12) In (11) above of the present invention, there is provided the method for preparing a positive electrode active material, wherein the transition metal hydroxide and the lithium raw material are mixed so that the transition metal hydroxide and the lithium element in the lithium raw material have a molar ratio of 1:1.2 to 1:1.6.

### ADVANTAGEOUS EFFECTS

The transition metal hydroxide according to the present invention has a large specific surface area and has a particle size distribution curve diffusion index of less than 0.7, and thus may exhibit high reactivity to lithium during firing with a lithium raw material, thereby providing a positive electrode active material having excellent capacity characteristics.

In addition, the method for preparing a transition metal hydroxide according to the present invention may prepare a transition metal hydroxide having a high specific surface area and a particle size distribution curve diffusion index within a specific range by performing a co-precipitation reaction under conditions in which the dissolved oxygen is controlled.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a SEM image (magnification of 10 K) of a transition metal hydroxide prepared in Example 1;
FIG. 2 is a SEM image (magnification of 10 K) of a transition metal hydroxide prepared in Example 2;
FIG. 3 is a SEM image (magnification of 10 K) of a transition metal hydroxide prepared in Comparative Example 1;
FIG. 4 is a SEM image (magnification of 10 K) of a transition metal hydroxide prepared in Comparative Example 2;
FIG. 5 is a SEM image (magnification of 10 K) of a positive electrode active material of Example 1;
FIG. 6 is a SEM image (magnification of 10 K) of a positive electrode active material of Example 2;
FIG. 7 is a SEM image (magnification of 10 K) of a positive electrode active material of Comparative Example 1; and
FIG. 8 is a SEM image (magnification of 10 K) of a positive electrode active material of Comparative Example 2.

### BEST MODE FOR CARRYING OUT THE INVENTION

Terms or words used in this specification and claims should not be interpreted as being limited to a conventional or dictionary meaning, and should be interpreted as the meaning and concept that are consistent with the technical spirit, based on the principle that an inventor can appropriately define the concepts of terms in order to explain the invention in the best ways.

### Definition of Terms

As used herein, the term "primary particle" refers to a single particle in the form in which particles are separated and/or dispersed from each other as an independent phase in which the particles are not aggregated with each other morphologically.

As used herein, the term "secondary particle" refers to a particle structure that is generally contrasted with a primary particle (single particle), which means a structure in which small-sized primary particles are physically and/or chemically aggregated to form a relatively large particle shape.

As used herein, the term "polycrystalline particle" refers to a secondary particle formed by the aggregation of a plurality of primary particles, in which the lattice structure of the crystal is not regularly maintained in the entire particle, and has various orientations.

As used herein, the term "average particle diameter (D₅₀)" refers to a particle diameter corresponding to 50% of a volume accumulation amount in a volume-based particle size distribution curve measured by a laser diffraction scattering particle size distribution measurement method.

### Measurement methods

In the present invention, "average particle diameters (D₅₀, D₉₀, D₁₀)" are measured by a laser diffraction scattering particle size distribution measurement method, which are measured by dispersing particles in a dispersion medium, and then introducing the particles into a laser diffraction measurement device (Microtrac S3500), and emitting ultrasonic waves of 28 kHz at an output of 60 W, and then calculating particle diameters corresponding to volume accumulation amounts of 50%, 10%, and 90%, respectively in the measurement device.

In the present invention, the "specific surface area" is calculated from the amount of nitrogen gas adsorbed at a liquid nitrogen temperature (77K) by pretreating a sample of 3.00 g under a vacuum condition at 200 °C using surface area analyzer TriStar 2 plus (Micromeritics Corp.).

### Transition Metal Hydroxide

The present invention provides a transition metal hydroxide capable of providing a low-cobalt or cobalt-free lithium- and manganese-rich nickel-based positive electrode active material, which has excellent capacity characteristics due to high reactivity with a lithium raw material.

According to an embodiment of the present invention, the transition metal hydroxide is a positive electrode active material precursor, particularly, a positive electrode active material precursor that can be usefully applied to the preparation of a cobalt-free lithium- and manganese-rich nickel-based positive electrode active material, and includes polycrystalline particles composed of spherical secondary particles in which needle-shaped primary particles are aggregated, wherein the specific surface area measured by a nitrogen adsorption BET method is 23 m²/g to 43 m²/g, and a particle size distribution curve diffusion index defined by Equation 1 below is less than 0.7, and the transition metal hydroxide is represented by Formula 1 below: particle size distribution curve diffusion index = [(D90-D10)/D50]
wherein, in Equation 1 above,
D₁₀ denotes a particle diameter corresponding to 10% of a volume accumulation from a side having a small particle diameter in a volume-based particle size distribution obtained via measurement by a laser diffraction scattering-type particle size distribution measurement method, D₉₀ denotes a particle diameter corresponding to 90% of a volume accumulation from a side having a small particle diameter in the particle size distribution, and D₅₀ denotes a particle diameter corresponding to 50% of a volume accumulation from a side having a small particle diameter in the particle size distribution,

   [Formula 1] [MnₐNi_{b}M¹_{c1}M²_{c2}](OH)₂
wherein, in Formula 1 above,
M¹ is Co,
M² is one selected from among Zr, Al, Cu, Re, V, Cr, Fe, Ga, Si, B, Ru, Ti, Nb, Mo, Mg, W, and Pt, and
0.50<a≤0.80, 0.10≤b≤0.40, 0≤c₁≤0.02, 0≤c₂≤0.10, and a+b+c₁+c₂=1.

A typical NCM-based positive electrode active material is prepared from a precursor having a rhombohedral lattice structure in a single phase and has a structure in which a transition metal layer and a Li layer are repeated.

On the other hand, low-cobalt or cobalt-free Li- and Mn-rich-based positive electrode active materials are prepared from a Mn-rich precursor having a crystal structure of a monoclinic lattice and a rhombohedral lattice in two phases, and has a structure in which Li atoms are additionally included in a transition metal layer in addition to a repeated structure of a transition metal layer and a Li layer, and thus, more Li is required compared to a general NCM-based positive electrode active material, and thus a positive electrode active material precursor having a high specific surface area and being capable of contacting Li is required.

Accordingly, like a general NCM-based positive electrode active material precursor, for a precursor having a flake-shaped primary particle and a low specific surface area, it is difficult to properly react with an excess amount of Li, and thus it is difficult to express sufficient capacity characteristics of the prepared positive electrode active material, and as a result, there is a limitation in that the initial capacity, lifetime characteristics, and resistance characteristics of the battery are poor.

However, the transition metal hydroxide according to the present invention includes polycrystalline particles composed of secondary particles in which needle-shaped primary particles are aggregated, and has a high specific surface area within a specific range and a particle size distribution curve diffusion index of less than 0.7, thereby having high reactivity with Li, and smoothly reacting with an excessive amount of Li, thereby providing a positive electrode active material having excellent capacity characteristics, lifetime characteristics, and resistance characteristics.

The transition metal hydroxide according to an embodiment of the present invention may include Ni and Mn, and may include at least 50 mol% of Mn among transition metals. In this case, it may be easy to secure a high capacity of the positive electrode active material obtained therefrom.

As another example, the content of Mn in the transition metal may be 55 mol% to 80 mol%, specifically 60 mol% to 80 mol% in terms of excellent balanced initial charge/discharge capacity.

As another example, in the transition metal hydroxide according to an embodiment of the present invention, metal components (M¹ and M²) other than Ni and Mn may be coated or doped on the surface thereof, and in this case, the metal component M¹ may be Co, and M² may be one selected from among Zr, Al, Cu, Re, V, Cr, Fe, Ga, Si, B, Ru, Ti, Nb, Mo, Mg, W and Pt.

As another example, the transition metal hydroxide according to an embodiment of the present invention may be represented by Formula 1 below:

[MnₐNi_{b}M¹_{c1}M²_{c2}](OH) ₂

wherein, in Formula 1 above,
M¹ is Co,
M² is one selected from among Zr, Al, Cu, Re, V, Cr, Fe, Ga, Si, B, Ru, Ti, Nb, Mo, Mg, W, and Pt, and
0.50<a≤0.80, 0.10≤b≤0.40, 0≤c₁≤0.02, 0≤c₂≤0.10, and a+b+c₁+c₂=1.

In Formula 1 above, Mn may be included in a content corresponding to a, and when a is within the above range, the charging capacity may be excellent.

In addition, in Formula 1 above, Ni may be included in a content corresponding to b, and when b is within the above range, the charging capacity may be excellent.

In addition, in Formula 1 above, M¹ and M² are metal elements coated or doped on the surface of the transition metal hydroxide, respectively, and may be included in contents corresponding to c₁ and c₂, respectively.

More specifically, the transition metal hydroxide may be represented by Formula 1-1 below:

[Formula 1-1] [MnₐNi_{b}M²_{c2}](OH) ₂

wherein, in Formula 1-1 above,
M² is one selected from among Zr, Al, Cu, Re, V, Cr, Fe, Ga, Si, B, Ru, Ti, Nb, Mo, Mg, W, and Pt, and
0.6≤a≤0.8, 0.1≤b≤0.4, 0≤c₂≤0.1, and a+b+c₂=1.

More specifically, in Formula 1-1 above, 0.6≤a≤0.8, 0.2≤b≤0.4, c₂=0, and a+b+c₂=1 may be satisfied.

In addition, the transition metal hydroxide has a specific surface area of 23 m²/g to 43 m²/g measured by a nitrogen adsorption BET method, and a particle size distribution curve diffusion index defined by Equation 1 is less than 0.7. Specifically, the particle size distribution curve diffusion index may be 0.4 to 0.7 (exclusive of 0.7). The transition metal hydroxide according to the present invention satisfies the specific surface area and the particle size distribution curve diffusion index, thereby providing a positive electrode active material having excellent particle uniformity and high reactivity with Li, thus having excellent capacity characteristics.

In addition, the transition metal hydroxide includes polycrystalline particles composed of spherical secondary particles in which needle-shaped primary particles are aggregated.

As another example, the transition metal hydroxide may be polycrystalline particles composed of secondary particles in which needle-shaped primary particles are aggregated.

Meanwhile, the transition metal hydroxide according to an embodiment of the present invention has a particle shape including spherical secondary particles in which the needle-shaped primary particles are aggregated, and thus the pores in the particles may be developed and may have a high specific surface area.

As another example, in the transition metal hydroxide, the specific surface area and the particle size distribution curve diffusion index may be affected by the shape and size of the primary particles constituting the transition metal hydroxide, and the transition metal hydroxide according to an embodiment of the present invention may be prepared by the co-precipitation reaction under a condition in which the dissolved oxygen, which will be described later, is controlled to a specific range, and thus the aspect ratio and the average particle diameter of the primary particles and the average particle diameter of the secondary particles may be appropriately controlled, thereby satisfying the above-described specific surface area and particle size distribution curve diffusion index.

Specifically, when the primary particles are formed very thin or thick, the specific surface area of the resulting transition metal hydroxide may be too low or high, and when the specific surface area is too low, the reactivity with Li is low, and thus the capacity characteristics of the positive electrode active material to be prepared are poor. In contrast, when the specific surface area is too high, the non-uniformity of the particles is increased, and thus the capacity characteristics of the positive electrode active material to be prepared are significantly increased, and thus the reproducibility is poor.

In this respect, the transition metal hydroxide of the present invention satisfies both the above-described specific surface area and particle size distribution curve diffusion index, thereby providing a positive electrode active material having excellent capacity characteristics and reproducibility.

In addition, in terms of being easier to satisfy both the specific surface area and the particle size distribution curve diffusion index, the secondary particles may have an average particle diameter (D₅₀) of 3 µm to 12 µm.

### Method for Preparing Transition Metal Hydroxide

The present invention provides a method for preparing the transition metal hydroxide.

The method for preparing a transition metal hydroxide according to an embodiment of the present invention includes a step of subjecting a transition metal solution containing Ni and Mn to a co-precipitation reaction in the presence of a basic solution, and the co-precipitation reaction is performed under a condition of 0.0054 mg/L to 0.075 mg/L of dissolved oxygen.

Specifically, the co-precipitation reaction may be performed by a step (S1-1) for adding a transition metal solution containing Ni and Mn and a basic solution into a reactor in which a pH of 12.0 or less and an inert atmosphere are formed, and starting a reaction under a condition of pH of 11.0 or less to generate a particle nucleus; and a step (S1-2) for continuously growing the particle nucleus while maintaining the pH of 11.0 or less, and nitrogen and air are introduced into the reactor at the same time as starting the reaction of step (S1-1) to form the dissolved oxygen condition, and the dissolved oxygen condition is maintained during the entire reaction of steps (S1-1) and (S1-2).

In the method for preparing a transition metal hydroxide according to the present invention, the above-described primary particles are formed by performing the co-precipitation reaction under an atmosphere controlled with the dissolved oxygen condition, and are grown to the secondary particles, thereby preparing a transition metal hydroxide that satisfies a particular specific surface area and particle size distribution curve diffusion index.

Meanwhile, here, the dissolved oxygen may be controlled by injecting nitrogen and air, and adjusting these inputs, and for example, nitrogen and air may be injected at a volume ratio of 99.5:0.5 to 95:5.

The transition metal solution may be prepared by adding a transition metal raw material to a solvent, specifically, deionized water, or a mixed solvent of deionized water and an organic solvent (e.g., alcohol or the like) that may be uniformly mixed with the deionized water, and mixing the same, or may be prepared by mixing an aqueous solution of the transition metal raw material.

The transition metal raw material may be sulfate, acetate, nitrate, halide, sulfide, hydroxide, oxide, or oxyhydroxide of a transition metal.

As a specific example, the Ni raw material may be, for example, nickel-containing acetate, nitrate, sulfate, halide, sulfide, hydroxide, oxide, or oxyhydroxide, and more specific examples thereof may include Ni(OH)₂, NiO, NiOOH, NiCO₃ ·2Ni(OH)₂ · 4H₂O, NiC₂O₂ ·2H₂O, Ni(NO₃)₂ · 6H₂O, NiSO₄ · 6H₂O, a fatty acid nickel salt, a nickel halide, or a combination thereof, but are not limited thereto.

In addition, the Mn raw material may be, for example, manganese-containing acetate, nitrate, sulfate, halide, sulfide, hydroxide, oxide, or oxyhydroxide, and specific examples thereof may include manganese oxide such as Mn₂O₃, MnO₂, or Mn₃O₄; manganese salt such as MnCO₃, Mn(NO₃)₂, MnSO₄, manganese acetate, manganese dicarboxylate, manganese citrate, or fatty acid manganese salt; manganese oxyhydroxide, manganese chloride, or a combination thereof, but are not limited thereto.

As another example, the transition metal solution may further include at least one selected from among Zr, Al, Co, Cu, Re, V, Cr, Fe, Ga, Si, B, Ru, Ti, Nb, Mo, Mg, and Pt, in this case, the transition metal solution may further include the raw material containing Zr, Al, Co, Cu, Re, V, Cr, Fe, Ga, Si, B, Ru, Ti, Nb, Mo, Mg, W, or Pt, and the raw material may be acetate, nitrate, sulfate, halide, sulfide, hydroxide, oxide, or oxyhydroxide containing each of the metals.

In addition, the transition metal solution may include at least 50 mol% of Mn in the transition metal in the solution.

As another example, the transition metal solution does not include Co.

In addition, the basic solution may be a precipitant, and may include a hydroxide of alkali metal or alkaline earth metal, such as NaOH, KOH, or Ca(OH)₂, a hydrate thereof, or a combination thereof.

As another example, the basic solution may be used, for example, in the form of an aqueous solution, and in this case, deionized water or a mixture of deionized water and an organic solvent (e.g., alcohol, etc.) which can be uniformly mixed with the deionized water may be used as the solvent.

In addition, the basic solution may serve to control the pH in the reactor during the co-precipitation reaction, and the amount of addition thereof may be adjusted to control the pH in the reactor under a desired condition.

In addition, the co-precipitation reaction may be performed by further using an ammonium cation complex forming agent as needed, the ammonium cation complex forming agent may include any one or more selected from the group consisting of NH₄OH, (NH₄)₂SO₄, NH₄NO₃, NH₄Cl, CH₃COONH₄, and (NH₄)₂CO₃, and the ammonium cation complex forming agent may be used in the form of an aqueous solution, and in this case, the ammonium cation complex forming agent may be prepared by mixing deionized water or a mixed solvent of deionized water and an organic solvent (e.g., alcohol, etc.) which can be uniformly mixed with the deionized water.

Meanwhile, the co-precipitation reaction may be performed while stirring at a temperature of 40 °C to 70 °C, and the stirring speed is not particularly limited, but may be stirred at 100 rpm to 2,000 rpm in terms of facilitating an increase in the reaction speed.

In addition, the method for preparing a transition metal hydroxide according to an embodiment of the present invention may further perform any one or more processes selected from washing and drying after the co-precipitation reaction, and in this case, the washing and drying may be performed by a conventional means in the art.

For example, the washing may be performed by adding a precursor to ultrapure water and stirring the mixture, and the washing temperature may be 70 °C or less, specifically, 40 °C to 70 °C, and the washing time may be 10 minutes to 1 hour.

In addition, the drying is not particularly limited as long as it is a method capable of drying the prepared precursor without causing adverse chemical changes in the prepared precursor, but for example, a drying method using a spray dryer, a rotary evaporator, a vacuum drying method, or a natural drying method may be used.

### Positive Electrode Active Material

The present invention provides a positive electrode active material prepared using the transition metal hydroxide.

The positive electrode active material according to an embodiment of the present invention includes polycrystalline particles composed of secondary particles in which needle-shaped primary particles are aggregated, and the specific surface area measured by the nitrogen adsorption BET method may be 1.00 m²/g to 1.90 m²/g.

In addition, the positive electrode active material may be a compound represented by Formula 2 below:

[Formula 2] x[Li(Mn_{d}NiₑM¹_{f1}M²_{f2})O₂]·1-x[Li₂MnO₃]

wherein, in Formula 2 above,
M¹ is Co,
M² is one selected from among Zr, Al, Cu, Re, V, Cr, Fe, Ga, Si, B, Ru, Ti, Nb, Mo, Mg, W, and Pt, and
0.600≤x≤0.800, 0.570≤d≤0.720, 0.140≤e≤0.290, 0≤f₁<0.034, 0≤f₂≤0.140, and d+e+f₁+f₂<1.200.

### Method for Preparing Positive Electrode Active Material

The present invention provides a method for preparing a positive electrode active material using the transition metal hydroxide.

The method for preparing a positive electrode active material may include a step for mixing the transition metal hydroxide and a lithium raw material; and a step for firing the mixture.

Specifically, the method for preparing a positive electrode active material according to the present invention may be performed by a method for preparing a positive electrode active material known in the art except for using, as a precursor, the transition metal hydroxide according to the present invention, and the method is not particularly limited.

Examples of the lithium raw material may include a lithium-containing carbonate (*e.g.*, lithium carbonate, *etc.*), a hydrate (*e.g.,* lithium hydroxide hydrate (LiOH·H₂O), *etc*.)*,* a hydroxide (*e.g.,* lithium hydroxide, *etc.*), a nitrate (*e.g.,* lithium nitrate (LiNO₃), etc.), a chloride (e.g., lithium chloride (LiCl), *etc.*)*, etc.,* and any one alone thereof or a mixture of two or more thereof may
be used.

Meanwhile, the mixing of the transition metal hydroxide and the lithium raw material may be performed by solid phase mixing such as jet milling, and the mixture ratio of the transition metal hydroxide and the lithium raw material may be determined within a range satisfying the molar fraction of each component in the finally prepared positive electrode active material. More specifically, the transition metal hydroxide and the lithium raw material may be mixed such that a molar ratio of the transition metal hydroxide and lithium elements in the lithium raw material becomes 1:1.2 to 1:1.6.

In addition, although not essential, raw materials for doping a part of the transition metal and/or oxygen of the positive electrode active material may be additionally included in addition to the transition metal hydroxide and the lithium raw material during the mixing. For example, during the mixing, the aforementioned M-containing raw material or the X-containing raw material, which will be described below, may be additionally mixed. In this case, the X-containing raw material may be, for example, Na₃PO₄, K₃PO₄, Mg₃(PO₄)₂, AlF₃, NH₄F, LiF, or the like, but is not limited thereto. When a part of oxygen is replaced by the X element as described above, it is possible to obtain an effect of suppressing oxygen deintercalation and the reaction with an electrolyte during charging and discharging of the secondary battery.

Meanwhile, the firing may be performed at 800 °C to 1,000 °C, specifically, at 850 °C to 950 °C, and the firing time may be 5 hours to 30 hours, specifically 8 hours to 15 hours, but is not limited thereto.

### Positive Electrode and Secondary Battery

The present invention provides a positive electrode including the positive electrode active material, and a lithium secondary battery including the positive electrode.

The positive electrode according to an embodiment of the present invention includes a positive electrode current collector and a positive electrode active material layer formed on the positive electrode current collector, and in this case, the positive electrode active material layer includes the positive electrode active material as described above.

The positive electrode may be prepared according to a typical method for preparing a positive electrode except that the above-described positive electrode active material is used. For example, the positive electrode may be prepared by dissolving or dispersing components constituting the positive electrode active material layer, that is, a positive electrode active material, a conductive agent, and/or a binder in a solvent to prepare a positive electrode material mixture, coating at least one surface of the positive electrode current collector with the positive electrode material mixture, and then drying and rolling the coated positive electrode current collector, or by casting the positive electrode material mixture on a separate support and then peeling off the support to obtain a film and laminating the obtained film onto the positive electrode current collector.

In this case, the positive electrode current collector is not particularly limited as long as it has conductivity without causing adverse chemical changes in the battery, and, for example, stainless steel, aluminum, nickel, titanium, sintered carbon, or aluminum or stainless steel that is surface-treated with one of carbon, nickel, titanium, silver, or the like may be used. Also, the positive electrode current collector may typically have a thickness of 3 µm to 500 µm, and microscopic irregularities may be formed on the surface of the current collector to improve the adhesion of the positive electrode active material. For example, the positive electrode current collector may be used in various shapes such as a film, a sheet, a foil, a net, a porous body, a foam body, and a non-woven fabric body.

A positive electrode active material layer which includes the positive electrode active material according to the present invention and further optionally includes at least one of a conductive agent and a binder as needed is positioned on at least one surface of the current collector.

The positive electrode active material may be included in an amount of 80 wt% to 99 wt%, for example, 85 wt% to 98 wt% with respect to a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% with respect to the total weight of the positive electrode active material layer.

In addition, the binder serves to improve binding between positive electrode active material particles and the adhesion between the positive electrode active material and the current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% with respect to the total weight of the positive electrode active material layer.

Meanwhile, the solvent used in the preparation of a positive electrode may be a solvent normally used in the art, and for example, dimethyl sulfoxide (DMSO), isopropyl alcohol, N-methylpyrrolidone (NMP), acetone, or water may be used alone or a mixture thereof may be used. The amount of the solvent used may be appropriately adjusted in consideration of a coating thickness of a slurry, production yield, viscosity, or the like.

In addition, the lithium secondary battery according to the present invention includes a positive electrode, a negative electrode disposed to face the positive electrode, a separator interposed between the positive electrode and the negative electrode, and an electrolyte, wherein the positive electrode is the positive electrode according to the present invention as described above.

Meanwhile, the lithium secondary battery may further optionally include a battery container accommodating an electrode assembly of the positive electrode, the negative electrode, and the separator, and a sealing member for sealing the battery container.

In the lithium secondary battery, the negative electrode includes a negative electrode current collector and a negative electrode active material layer disposed on at least one surface of the negative electrode current collector.

The negative electrode may be prepared by a typical method for preparing a negative electrode, which is known in the art. For example, the negative electrode may be prepared by dissolving or dispersing components constituting the negative electrode active material layer, that is, a negative electrode active material, a conductive agent, and/or a binder in a solvent to prepare a negative electrode material mixture, coating at least one surface of the negative electrode current collector with the negative electrode material mixture, and then drying and rolling the coated negative electrode current collector, or by casting the negative electrode material mixture on a separate support and then peeling off the support to obtain a film and laminating the obtained film onto the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 µm to 500 µm, and as in the case of the positive electrode current collector, microscopic irregularities may be formed on the surface of the negative electrode current collector to enhance the adhesion of a negative electrode active material. For example, the negative electrode current collector may be used in various shapes such as a film, a sheet, a foil, a net, a porous body, a foam body, and a non-woven fabric body.

A compound capable of reversibly intercalating and deintercalating lithium may be used as the negative electrode active material. Specific examples of the negative electrode active material may include a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOₓ(0 < x < 2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

Meanwhile, in the secondary battery, the separator separates the negative electrode and the positive electrode and provides a movement path of lithium ions, wherein any separator may be used as the separator, without particular limitation, as long as it is typically used in a secondary battery, and particularly, a separator having high moisture-retention ability for an electrolyte solution as well as low resistance to the transfer of electrolyte ions may be preferably used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used in order to secure heat resistance or mechanical strength, and the separator having a single-layered or multi-layered structure may be optionally used.

Meanwhile, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as Ra-CN (where Ra is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (*e.g.*, ethylene carbonate or propylene carbonate) having high ionic conductivity and high dielectric constant, which may increase charge/discharge performance of the battery, and a low-viscosity linear carbonate-based compound (*e.g.*, ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to 9.

The lithium salt may be used without particular limitation as long as it is a compound capable of providing lithium ions used in the lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, *N-*substituted oxazolidinone, *N,N*-substituted imidazolidine, ethyleneglycol dialkylether, an ammonium salt, pyrrole, 2-methoxyethanol, or aluminum trichloride, may be further included in the electrolyte in addition to the electrolyte components. In this case, the additive may be included in an amount of 0.1 wt% to 5 wt% based on a total weight of the electrolyte.

The secondary battery including the positive electrode active material according to the present invention as describe above has excellent capacity properties, and high-temperature stability, and thus, may be usefully applied in portable devices such as a mobile phone, a notebook computer, and a digital camera, and in the field of electric cars such as a hybrid electric vehicle (HEV).

In addition, the secondary battery according to the present invention may be used as a unit cell of a battery module, and the battery module may be applied in a battery pack. The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

### Examples

Hereinafter, examples of the present invention will be described in detail so that a person with ordinary skill in the art to which the present invention pertains can easily carry out the present invention. The invention may, however, be embodied in many different forms and should not be construed as being limited to the examples described herein.

### Example 1

NiSO₄ and MnSO₄ were mixed in deionized water in an amount such that Ni:Mn was in a molar ratio of 35:65 to prepare a 2.4 M aqueous transition metal solution.

2.6 L of deionized water was added to a 10-L continuous stirred tank reactor, and a nitrogen gas was purged at 2 L/min to remove dissolved oxygen in water, thereby creating a non-oxidizing atmosphere in the reactor. Thereafter, while continuously flowing nitrogen gas at 2 L/min, 3.87 mL of a 25 wt% NaOH aqueous solution was added thereto and the resultant mixture was stirred at a rate of 150 rpm at 50 °C, thereby forming a pH in the reactor to about 12.0.

Thereafter, while stirring the mixture at 1,000 rpm, to the reactor, an aqueous transition metal solution was continuously introduced at 0.83 L/hr and an aqueous NaOH solution at 0.29 L/hr, and at the same time, nitrogen and air were introduced in a volume ratio of 99.5:0.5 to control the amount of dissolved oxygen to 0.0054 mg/L, and a co-precipitation reaction was performed so that the pH in the reactor became about 11.0 within 2 hours of the reaction time, and then the co-precipitation reaction was continued for 48 hours at pH of about 11.0. After the completion of the co-precipitation reaction, the produced particles were separated, washed, and dried at 120 °C for 12 hours to prepare a transition metal hydroxide of Mn_{0.65}Ni_{0.35}(OH)₂.

### Example 2

A transition metal hydroxide of Mn_{0.65}Ni_{0.35}(OH)₂ was prepared in the same manner as in Example 1, except that the co-precipitation reaction was performed under a condition in which the dissolved oxygen was controlled to 0.079 mg/L by adding an aqueous transition metal solution and simultaneously adding nitrogen and air in a volume ratio of 95:5.

### Comparative Example 1

A transition metal hydroxide of Mn_{0.65}Ni_{0.35}(OH)₂ was prepared in the same manner as in Example 1, except that the co-precipitation reaction was performed under a condition in which the dissolved oxygen was controlled to 0.0049 mg/L by adding an aqueous transition metal solution and simultaneously adding nitrogen and air in a volume ratio of 99.8:0.2.

### Comparative Example 2

A transition metal hydroxide of Mn_{0.65}Ni_{0.35}(OH)₂ was prepared in the same manner as in Example 1, except that the co-precipitation reaction was performed under a condition in which the dissolved oxygen was controlled to 0.092 mg/L by adding an aqueous transition metal solution and simultaneously adding nitrogen and air in a volume ratio of 90:10.

### Experimental Example 1

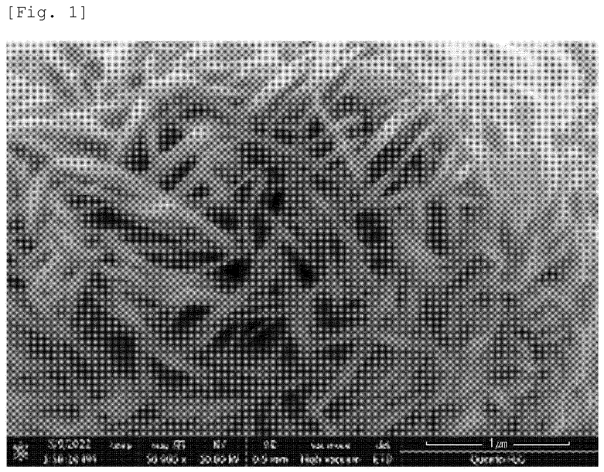

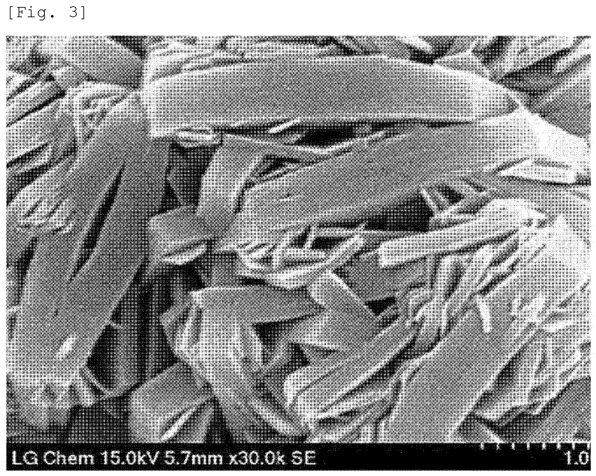

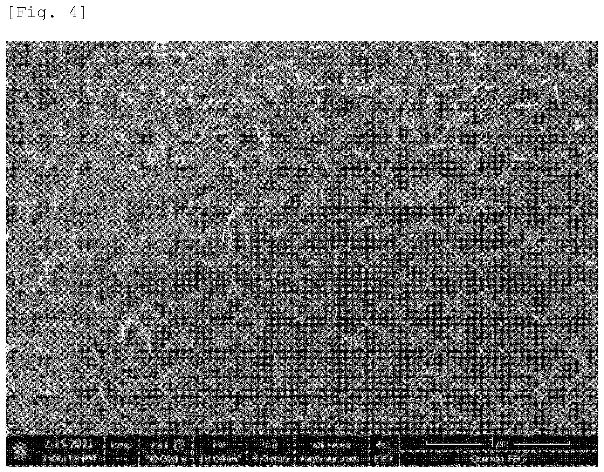

Particle surface analysis, specific surface area, and particle size distribution curve diffusion index of each transition metal hydroxide prepared in Examples and Comparative Examples were analyzed, and the results are shown in Table 1 below and FIGS. 1 to 4.
(1) Particle Surface Analysis
   The particle surface condition was confirmed through SEM analysis, and the SEM analysis was performed using SEM (QUANTA FEG 250 manufactured by Thermo Fischer Co., Ltd.) under the following conditions.
   1) high voltage: 10,000 kV
   2) chamber pressure: 9.0×10⁻⁵ mbar
   3) Gun pressure: 6.85×10⁻¹⁰ mbar
   4) Emission current: 165 µA
   5) WD: 10 mm
   6) Beam spot size: 3.0
   7) stage bias: 4000V
   8) Magnification: 10 K
(2) Specific surface area (m²/g)
   The specific surface area was measured by the BET method, and was calculated from the amount of nitrogen gas adsorbed at a liquid nitrogen temperature (77K) using Tristar II (Micromeritics Corp.).
(3) Particle Size Distribution Curve Diffusion Index
   The measurement was performed by a laser diffraction scattering particle size distribution measurement method, the particles were dispersed in a dispersion medium and then introduced into a laser diffraction measuring apparatus (Microtrac S3500), and an ultrasonic wave of 28 kHz was emitted at an output of 60 W, and then the particle diameters corresponding to the volume accumulation amount of 50%, 10%, and 90%, respectively, in the measuring apparatus were calculated according to Equation 1 below: particle size distribution curve diffusion index = [(D90-D10)/D50]
   wherein, in Equation 1 above,
   D₁₀ denotes a particle diameter corresponding to 10% of a volume accumulation from a side having a small particle diameter in a volume-based particle size distribution obtained via measurement by a laser diffraction scattering-type particle size distribution measurement method, D₉₀ denotes a particle diameter corresponding to 90% of a volume accumulation from a side having a small particle diameter in the particle size distribution, and D₅₀ denotes a particle diameter corresponding to 50% of a volume accumulation from a side having a small particle diameter in the particle size distribution.

**[Table 1]**

| Division | Example 1 | Example 2 | Comparative Example 1 | Comparative Example 2 |
|---|---|---|---|---|
| Specific surface area (m²/g) | 23 | 43 | 12 | 82 |
| Particle size distribution curve diffusion index | 0.40 | 0.56 | 0.37 | 0.73 |

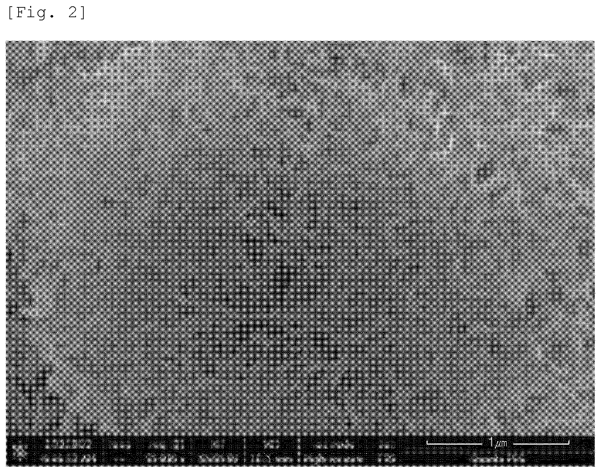

As shown in Table 1 above, it was confirmed that the transition metal hydroxides of Examples 1 and 2 met the specific surface area and particle size distribution curve diffusion index presented in the present invention. In addition, through FIGS. 1 and 2, it may be confirmed that the transition metal hydroxides of Examples 1 and 2 have a uniform aggregation of needle-shaped primary particles having a uniform size.

### Experimental Example 2

A positive electrode active material was prepared by using each of positive electrode active material precursors prepared in Examples and Comparative Examples, and a battery was manufactured by using the positive electrode active material, and then battery performance was evaluated.

### (1) Preparation of Positive Electrode Active Material

Each positive electrode active material precursor and LiOH were mixed so that the molar ratio of the precursor and Li in LiOH became 1:1.35, and then fired at 900 °C for 15 hours in an air atmosphere to prepare each positive electrode active material.

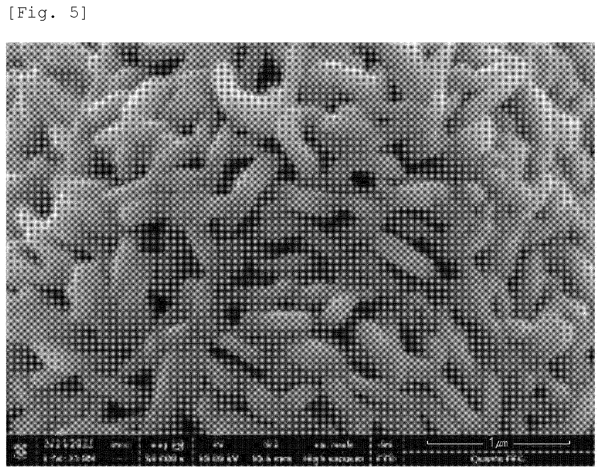

The prepared positive electrode active material was measured by the same method as in Experimental Example 1 for SEM (QUANTA FEG 250, Thermo Fisher Co., Ltd.) and a specific surface area, and the results are shown in Table 2 below and FIGS. 5 to 8.

### (2) Preparation of Positive Electrode

Each of prepared positive electrode active materials, a carbon black conductive agent, and a PVdF binder were mixed in an N-methylpyrrolidone solvent at a weight ratio of 92.5:3.0:4.5 to prepare a positive electrode material mixture (viscosity: 5,000 mPa ·s), and one surface of an aluminum current collector was coated with the positive electrode material mixture, dried at 130 °C, and then rolled to prepare a positive electrode.

### (3) Manufacture of Battery

A lithium metal was used as the negative electrode.

An electrode assembly was prepared by interposing a porous polyethylene separator between the positive electrode and the negative electrode, was positioned inside a battery case, and an electrolyte solution was injected into the case, thereby manufacturing a lithium secondary battery. In this case, the electrolyte solution was prepared by dissolving 1.0 M lithium hexafluorophosphate (LiPF₆) in an organic solvent composed of ethylene carbonate/ethylmethyl carbonate (mixing volume ratio of EC/EMC = 3/7).

For each half cell of the lithium secondary battery prepared as described above, the half-cell was charged at 25 °C at 0.1C in a CCCV mode until it reached 4.70 V, discharged to 2.0 V with a constant current of 0.1C, and activated, then charged at 0.1C and 0.33C in a CCCV mode until it reached 4.4 V, and discharged to 2.5 V with a constant current of 0.1C and 0.33C to measure initial charge/discharge capacity and efficiency. In addition, the ratio (0.33C/0.1C, %) of the capacity when charged at 0.1C and discharged at 0.1C and the capacity when discharged at 0.33C was measured.

In addition, the discharge resistance was confirmed by calculating the voltage/current at 60 seconds after the start of discharge, and the increase rate of the discharge resistance value of the 30th cycle compared to the discharge resistance value of the first cycle was calculated to indicate the resistance increase rate (%).

**[Table 2]**

| Division | Initial charge capacity (mAh/g) | | Initial discharge capacity (mAh/g) | | Initial efficiency (%) | | 0.33C/0.1 C (%) | Discharge resistance (Ω) | | Resis tance incre ase rate |
|---|---|---|---|---|---|---|---|---|---|---|
| | 0.1C | 0.33C | 0.1C | 0.33C | 0.1C | 0.33C | | 0.1C | 0.33C | |
| Example 1 | 233.0 | 215.5 | 216.5 | 200.0 | 92.9 | 92.8 | 92.4 | 55.1 | 46.3 | 114 |
| Example 2 | 232.8 | 214.3 | 215.4 | 198.6 | 92.5 | 92.7 | 92.2 | 47.3 | 41.3 | 119 |
| Comparat ive Example 1 | 163.5 | 117.8 | 138.5 | 116.4 | 84.7 | 98.8 | 84.0 | 106.4 | 84.3 | 125 |
| Comparat ive Example 2 | 213.3 | 192.7 | 193.6 | 176.8 | 90.8 | 91.7 | 91.3 | 59.7 | 50.3 | 139 |

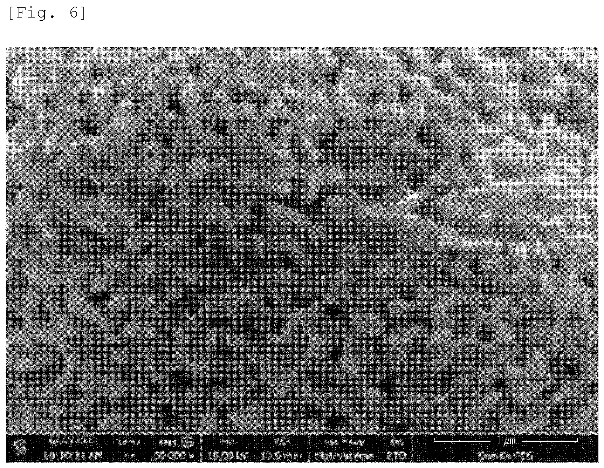

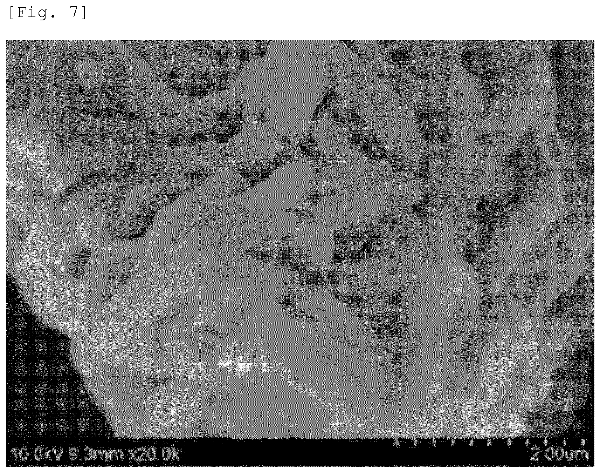

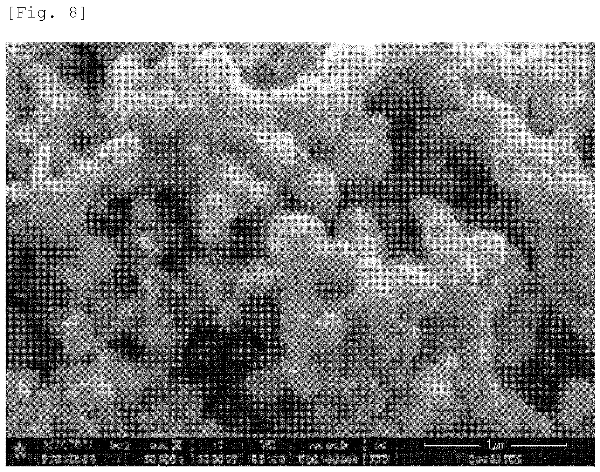

Referring to FIGS. 5 and 6, it may be confirmed that the particles of the positive electrode active materials of Example 1 and Example 2 are uniform and pores are developed. On the other hand, referring to FIGS. 7 and 8, it was confirmed that the positive electrode active materials of Comparative Example 1 and Comparative Example 2 had irregular large particles formed due to the aggregation without uniform particles or pores. In addition, referring to Table 2, it was confirmed that the positive electrode active materials of Examples 1 and 2 had overall improved initial charge/discharge capacity, resistance, and resistance increase rate characteristics compared to Comparative Examples 1 and 2.

## Claims

1. A transition metal hydroxide represented by Formula 1 below and comprising polycrystalline particles composed of spherical secondary particles in which needle-shaped primary particles are aggregated, wherein the specific surface area measured by a nitrogen adsorption BET method is 23 m²/g to 43 m²/g, and a particle size distribution curve diffusion index defined by Equation 1 below is less than 0.7: particle size distribution curve diffusion index = [(D90-D10)/D50] wherein, in Equation 1 above,
D₁₀ denotes a particle diameter corresponding to 10% of a volume accumulation from a side having a small particle diameter in a volume-based particle size distribution curve obtained via measurement by a laser diffraction scattering-type particle size distribution measurement method, D₉₀ denotes a particle diameter corresponding to 90% of a volume accumulation from a side having a small particle diameter in the particle size distribution, and D₅₀ denotes a particle diameter corresponding to 50% of a volume accumulation from a side having a small particle diameter in the particle size distribution,
[Formula 1] [MnₐNi_{b}M¹_{c1}M²_{c2}(OH)₂
wherein, in Formula 1 above,
M¹ is Co,
M² is one selected from among Zr, Al, Cu, Re, V, Cr, Fe, Ga, Si, B, Ru, Ti, Nb, Mo, Mg, W, and Pt, and
0.50<a≤0.80, 0.10≤b≤0.40, 0≤c₁≤0.02, 0≤c₂≤0.10, and a+b+c₁+c₂=1.

2. The transition metal hydroxide of claim 1, wherein the transition metal hydroxide does not comprise Co.

3. The transition metal hydroxide of claim 1, wherein the transition metal hydroxide is represented by Formula 1-1 below:
[Formula 1-1] [MnₐNi_{b}M²_{c2}](OH)₂
wherein, in Formula 1-1 above,
M² is one selected from among Zr, Al, Cu, Re, V, Cr, Fe, Ga, Si, B, Ru, Ti, Nb, Mo, Mg, W, and Pt, and
0.6≤a≤0.8, 0.1≤b≤0.4, 0≤c₂≤0.1, and a+b+c₂=1.

4. The transition metal hydroxide of claim 1, wherein the particle size distribution curve diffusion index is 0.4 or more and less than 0.7.

5. The transition metal hydroxide of claim 1, wherein the secondary particles have an average particle diameter (D₅₀) of 3 µm to 12 µm.

6. A method for preparing a transition metal hydroxide, the method comprising a step of: subjecting a transition metal solution containing Ni and Mn to a co-precipitation reaction in the presence of a basic solution, wherein the co-precipitation reaction is performed under a condition of 0.0054 mg/L to 0.075 mg/L of dissolved oxygen.

7. The method of claim 6, wherein the co-precipitation reaction is performed by:
a step (S1-1) for adding a transition metal solution containing Ni and Mn and a basic solution into a reactor in which a pH of 12.0 or less and an inert atmosphere are formed, and starting a reaction under a condition of pH of 11.0 or less to generate a particle nucleus; and
a step (S1-2) for continuously growing the particle nucleus while maintaining the pH of 11.0 or less,
wherein nitrogen and air are introduced into the reactor at the same time as starting the reaction of step (S1-1) to form the dissolved oxygen condition, and
the dissolved oxygen condition is maintained during the entire reaction of steps (S1-1) and (S1-2).

8. The method of claim 6, wherein the coprecipitation reaction is performed by further using an ammonium cation complex forming agent.

9. The method of claim 6, wherein the transition metal solution further comprises one or more selected from among Zr, Al, Co, Cu, Re, V, Cr, Fe, Ga, Si, B, Ru, Ti, Nb, Mo, Mg, W, and Pt.

10. The method of claim 6, wherein the transition metal solution comprises at least 50 mol% of Mn in the transition metal.

11. A method for preparing a positive electrode active material, the method comprising steps of:
mixing the transition metal hydroxide of claim 1 and a lithium raw material; and
sintering the mixture.

12. The method of claim 11, wherein the transition metal hydroxide and the lithium raw material are mixed such that a molar ratio of the transition metal hydroxide and lithium elements in the lithium raw material becomes 1:1.2 to 1:1.6.
